Europäisches Patentamt

European Patent Office

Office européen des brevets

(19)

(11) **EP 0 511 217 B2**

(12) **NEUE EUROPÄISCHE PATENTSCHRIFT**

(45) Veröffentlichungstag und Bekanntmachung des Hinweises auf die Entscheidung über den Einspruch:
**02.04.1997 Patentblatt 1997/14**

(45) Hinweis auf die Patenterteilung:
**13.04.1994 Patentblatt 1994/15**

(21) Anmeldenummer: **90917740.4**

(22) Anmeldetag: **04.12.1990**

(51) Int Cl.⁶: **G01G 7/04**, G01G 23/10

(86) Internationale Anmeldenummer:
**PCT/DE90/00935**

(87) Internationale Veröffentlichungsnummer:
**WO 91/10884 (25.07.1991 Gazette 1991/17)**

(54) **KOMPENSATIONSWAAGE**

COMPENSATION BALANCE

BALANCE A COMPENSATION

(84) Benannte Vertragsstaaten:
**CH DE ES FR GB IT LI**

(30) Priorität: **20.01.1990 DE 4001614**

(43) Veröffentlichungstag der Anmeldung:
**04.11.1992 Patentblatt 1992/45**

(73) Patentinhaber: **ROBERT BOSCH GMBH 70442 Stuttgart (DE)**

(72) Erfinder:
- **BUCHS, Willy CH-1027 Lonay (CH)**
- **COCHARD, Roland CH-1110 Morges (CH)**
- **JEANNIN, Pierre CH-1110 Morges (CH)**

(56) Entgegenhaltungen:
**DE-C- 3 230 998          DE-C- 3 234 372**

- **VDI-Berichte Nr. 312, 1978, S. 135-141, U. Milz, "Messung von Kraft und Masse unter Einfluss von Störbeschleunigungen"**

EP 0 511 217 B2

**Beschreibung**

Stand der Technik

Die Erfindung betrifft eine Kompensationswaage nach dem ersten Teil des Anspruchs 1, wie sie beispielsweise aus der DE-PS 32 30 998 bekannt ist. Kompensationswaagen enthalten ein beweglich geführtes, von der zu bestimmenden Last aus einer Ruhelage auslenkbares Teil sowie eine elektromagnetische Anordnung, die eine Kraft erzeugt, mit der das auslenkbare Teil unabhängig von der Last beispielsweise in der Ruhelage gehalten wird. Der durch eine Spule der elektromagnetischen Anordnung fließende Strom ist ein Maß für die Last, beispielsweise für das Gewicht der Last. Waagen weisen allgemein die Eigenschaft auf, daß sie bei Erschütterungen ihres Aufstellortes mit Meßvertverfälschungen reagieren können. Die Ursachen hierfür sind Kräfte, die infolge der Massenbeschleunigung auf die mechanischen Elemente der Waage sowie auf die Last einwirken.

In der DE-PS 32 30 998 wird eine Kompensationswaage vorgeschlagen, deren Ausgangssignal von einem Korrektursignal beeinflußt ist, das von einem fest mit dem Aufstellort in der Nähe der Waage, speziell in Verlängerung des die Last aufnehmende Gehäuses, verbunden Beschleunigungssensor abgeleitet ist, der die Störungs-Beschleunigungen des Aufstellortes ermittelt.

Aus dem Aufsatz von U.Mitz ' Messung von Kraft und Masse unter Einfluß von Störbeschleunigungen' in VDI-Berichte Nr. 312, 1978, Seiten 135-141, ist es grundsätzlich bekannt, einen Beschleunigungssensor am beweglichen teil eines Waage anzuordnen.

Der Erfindung liegt die Aufgabe zugrunde, eine Kompensationswaage anzugeben, deren Meßsignal in einem weiten Frequenzbereich weitgehend von Störsignalen befreit ist.

Vorteile der Erfindung

Die erfindungsgemäße Kompensationswaage gemäß den Merkmalen des Hauptanspruchs weist den Vorteil auf, daß das Gewicht oder die Masse einer Last nach kurzer Zeit mit hoher Genauigkeit angebbar ist. Die Verbesserung der Störsignalunterdrückung wird dadurch erreicht, daß wenigstens zwei Beschleunigungssensoren am beweglichen Teil der Waage angeordnet sind, die eine translatorische Beschleunigung in Wägerichtung und eine Drehbeschleunigung des beweglichen Teils erfassen. Drehbeschleunigungen machen sich besonders störend bei Waagen bemerkbar, die einen Hebel enthalten, mit dem die von der elektromagnetischen Anordnung aufzubringende Kraft in Bezug auf die von der Last verursachten Kraft beeinflußbar, vorzugsweise reduzierbar ist. Die wenigstens zwei Sensoren sind in Bezug auf die Drehachse des Hebels derart angeordnet, daß durch eine Differenzbildung der von der Sensoren abgegebenen Signale die Drehbeschleunigung erhaltbar ist.

Gemäß einer Ausgestaltung der erfindungsgemäßen Kompensationswaage ist vorgesehen, daß das wenigstens eine Korrektursignal nach der Ermittlung des durch die Spule der elektromagnetischen Anordnung fließende Stromes, der ein Maß für das Gewicht oder die Masse der Last ist, in das Ergebnis eingreift.

Eine Erhöhung der Arbeitsgeschwindigkeit der Kompensationswaage ist dadurch möglich, das wenigstens ein Korrektursignal in dem Teil der signalverarbeitenden Anordnung eingreift, der den Strom durch die Spule festlegt. Verzögerungen durch Signallaufzeiten werden auf diese Weise weitgehend vermieden.

Die korrektursignalverarbeitende Anordnung ist vorteilhafter Weise in zwei Signalpfade aufgeteilt, wovon einer zur Korrektur der translatorischen und der andere zur Korrrektur der Drehbeschleunigung vorgesehen ist. Die Drehbeschleunigung wird beispielsweise durch eine Differenzbildung dervon den beiden Beschleunigungssensoren abgegebenen Signale erhalten. Der Abzug der Drehbeschleunigung vom Signal wenigstens eines der beiden Beschleunigungssensoren ermöglicht dann die separate Darstellung der translatorischen Beschleunigung.

Die Aufteilung in zwei Korrektursignalpfade ermöglicht eine verbesserte Korrektur dadurch, daß die beiden unterschiedlichen Beschleunigungsarten jeweils in einem Funktionsblock verarbeitet werden, der eine Übertragungsfünktion aufweist, die wenigstens eine Konstante sowie eine weitere Konstante enthält, die mit dem das Gewicht oder die Masse die Last repräsenterenden Ausgangssignal multipliziert wird. Die Konstanten werden aus der Massenverteilung und geometrischen Gegebenheiten der Waage ermittelt.

Eine weitere Erhöhung der Störungsunterdrückung ist möglich durch eine jeweils in den Korrektursignalpfaden angeordnete Filterstufe, die eine jeweils auf die Waage abgestimmte Übertragungsfunktion zweiter Ordnung nachbildet. In einer einfacheren Ausgestaltung ist ein Filter vorgesehen, das nach der Zusammenführung der Korrektursignale angeordnet ist.

Sofern wenigstens ein Korrektursignal nach der Ermittlung des Stromes in das Ergebnis eingreift, ist eine gegebenenfalls auftretende Signalverzögerung entweder des Meß- oder des Korrektursignals vorzusehen, damit bei der Signalzusammenführung Kohärenz gegeben ist.

Ferner ist eine weitere Erhöhung der Arbeitsgeschwindigkeit der Waage möglich, durch eine Beeinflussung eines Differentialanteils eines in der signalverarbeitenden Anordnung enthaltenen Proportional-Differential-Reglers, die in Abhängigkeit von dem das Gewicht oder die Masse der Last repräsentierenden Ausgangssignal der Waage vorgenommen wird, wobei zunächt die Quadratwurzel des Signals ermittelt wird.

Besonders vorteilhaft ist die Realisierung der erfindungsgemäßen Kompensationswaage in einer sogenannten Single-Block-Bauweise. Hierbei sind mehrere Baugruppen der Waage aus einem einzigen Werkstück herausgearbeitet. Vorzugsweise sind die elektromagnetische Anordnung, daß beweglich geführte, von der Last beaufschlagte Teil sowie die Korrektur-Beschleunigungssensoren sowie gegebenenfalls ein Hebel aus einem Stück gearbeitet, wobei Biegelager und gegebenenfalls vorhandene Drehlager ebenfalls aus dem einen Stück herausgearbeitet sind. Mit dieser Maßnahme wird eine Gleichförmigkeit der beiden Korrektur-Beschleunigungssensoren erreicht. Ferner ist durch das homogene Material eine im voraus bekannte Temperaturverteilung erhaltbar. Die Single-Block-Bauweise erhöht somit die Meßgenauigkeit sowie deren Reproduzierbarkeit.

Weitere Einzelheiten und Verbesserungen der erfindungsgemäßen Kompensationswaage ergeben sich aus der folgenden Beschreibung.

Zeichnung

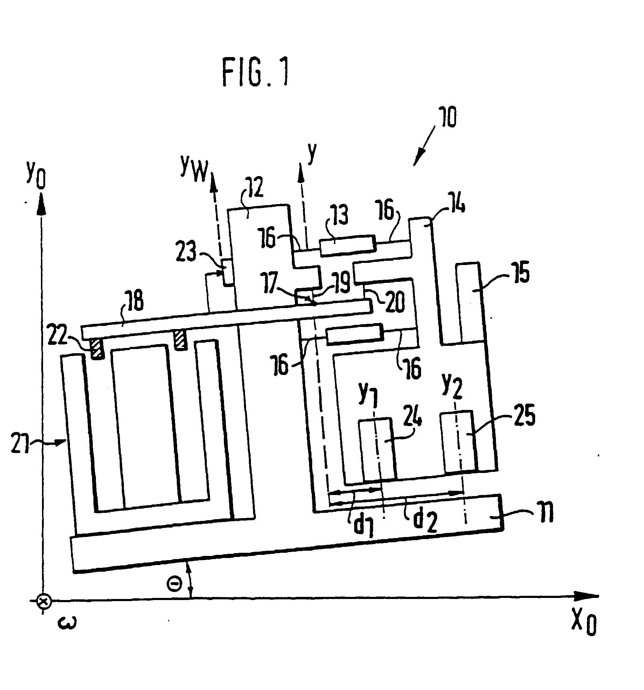

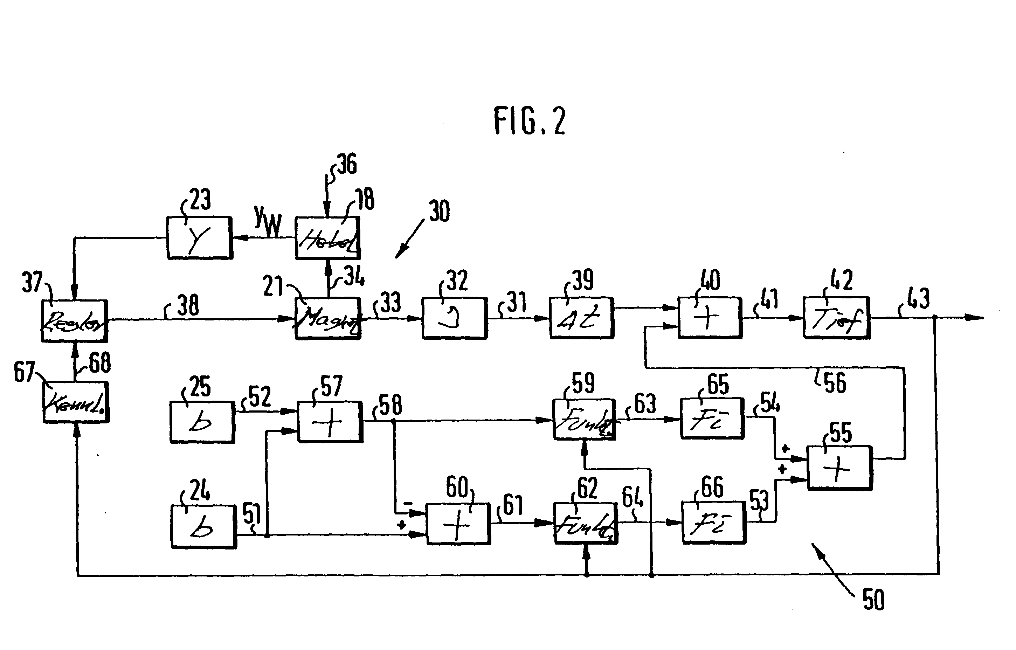

Figur 1 zeigt einen Aufbau einer Kompensationswaage und Figur 2 zeigt ein Blockschalt bild einer Auswerteeinheit zur Ermittlung des Gewichts oder der Masse einer Last.

Die in Figur 1 gezeigte Kompensationswaage 10 ist auf einer Grundplatte 11 montiert, die fest mit dem Anbringungsort der Waage 10 verbunden ist. Die Grundplatte 11 enthält einen festen Träger 12 an dem über ein elastisches Führungsparallelogramm 13 ein bewegliches Teil 14 befestigt ist. Auf das bewegliche Teil 14 kann eine Last 15 gelegt werden, deren Gewicht oder Masse zu bestimmen ist. Das elastische Führungsparallelogramm 13 enthält Biegelager 16, über die die Verbindungen hergestellt sind.

Der Hebel 18 ist mit einem Biegegelenk 19 am Träger 12 befestigt und weist an einem Ende ein Biegelager 20 auf, mit dem das bewegliche Teil 14 verbunden ist. Das andere Ende des Hebels 18 wirkt mit einer elektromagnetischen Anordnung 21 zusammen, die eine Spule 22 enthält, die in Figur 1 mit dem Hebel 18 verbunden eingetragen ist. Die Drehbewegung des Hebels 18 durch Beaufschlagung des beweglichen Teils mit der Last 15 oder durch Beaufschlagung der Waage 10 mit Störerschütterungen ist, zumindest bei kleinen Auslenkungen, mit einem Positionssensor 23 als näherungsweise lineare Verschiebung in $y_W$-Richtung detektierbar.

Das bewegliche Teil 14 enthält einen ersten und zweiten Beschleunigungssensor 24, 25, die jeweils eine Beschleunigung in $y_1$- und $y_2$-Richtung detektieren. Die beiden Sensoren 24, 25 weisen unterschiedliche Abstände $d_1$, $d_2$ bezüglich einer mit der Wägerichtung übereinstimmenden, durch den Drehpunkt 17 des Hebel 18 gehenden y-Richtung auf.

Die Kompensationswaage 10 ist im Koordinatensystem $\omega$, $x_o$, $y_o$ sowohl translatorischen als auch Dreh-Störungen ausgesetzt. Da der Hebel 18 gegenüber dem Träger 12 eine Drehbewegung $\theta$ um eine senkrecht auf der Zeichenebene stehenden, durch den Drehpunkt 17 gehenden Achse ausführen kann, bewirkt eine von außen, im $\omega$, $x_o$, $y_o$-Koordinatensystem einwirkende Drehung $\theta$ eine Störung. Die translatorische Störung tritt im $\omega$, $x_o$-$y_o$-Koordinatensystem in $x_o$, $y_o$-Richtung auf, deren Komponente in y-Richtung wirksam wird. Das bewegliche Teil 14 kann wegen dem elastischen Führungsparallelogramm 13 in bezug auf den Träger 12 eine relative Bewegung in y-Richtung ausführen, deren Beschleunigung mit $y_R$ bezeichnet wird.

Die Kompensationswaage 10 wird vorteilhafterweise in der sogenannten Single-Block-Bauweise realisiert. Hierbei sind verschiedene Baugruppen aus einem Werkstück herausgearbeitet. Vorzugsweise sind wenigstens das bewegliche Teil 14, daß elastische Führungsparallelogramm 13 mit den Biegelagern 16, der Hebel 18, das Biegegelenk 19, der am Hebel 18 angeordnete Teil der elektromagnetischen Anordnung 21 sowie die Beschleunigungssensoren 24, 25 aus einem Werkstück herausgearbeitet.

Figur 2 zeigt das Blockschaltbild einer Auswerteeinheit der Waage 10. Diejenigen Teile in Figur 2, die mit den in Figur gezeigten Teilen übereinstimmen, tragen in Figur 2 dieselben Bezugszahlen wie in Figur 1. Das Blockschaltbild enthält eine Signalverarbeitende Anordnung 30, die zumindest ein unkorrigiertes Waagen-Ausgangssignal 31 ermittelt, das an einem Stromsensor 32 auftritt, der den durch die Spule 22 der elektromagnetischen Anordnung 21 fließenden Strom erfaßt. Die von der elektromagnetischen Anordnung 21 erzeugte Kraft 34 wirkt auf den Hebel 18, auf den ebenfalls Störungen 36 einwirken. Der Hebel 18 reagiert darauf mit einer Auslenkung In $y_W$-Richtung, die vom Positionssensor 23 erfaßt und an einen Regler 37 weitergeleitet wird. Ein Sollwertgeber für den Regler 37 ist in Figur 2 nicht eingetragen, da der Sollwert im allgemeinen fest vorgegeben ist und vorzugsweise mit der Ruhelage des Hebels 18 und somit der des beweglichen Teils 14 übereinstimmt Das Ausgangssignal 38 des Reglers 37 ist ein Strom, den die elektromagnetische Anordnung 21 in die Kraft 34 umsetzt.

Das unkorrigierte Ausgangssignal 31 der Waage 10 wird über eine Verzögerung 39 einem Addierer 40 zugeführt, dessen Ausgangssignal 41 nach einer Tiefpaßfilterung 42 als Ausgangssignal 43 derWaage als Maß für das Gewicht oder die Masse der Last 15 nach außen abgegeben wird.

Ferner enthält das Blockschaltbild gemäß Figur 2 eine korrektursignalverarbeitende Anordnung 50, die aus den Ausgangssignalen 51, 52 der beiden Beschleunigungssensoren 24, 25 Korrektursignale 53, 54 ermittelt, die in einem Addierer 55 zusammengefaßt und als Gesamtkorrektursignal 56 dem Addierer 40 zugeführt werden. Die korrektursignalverarbeitende Anordnung 50 enthält einen Addierer 57, der die Differenz der beiden, von den Beschleunigungssensoren 24, 25 abgegebenen Signalen 51, 52 ermittelt. Das Ausgangssignal 58 des Addierers 57 gelangt einerseits in einen Funktionsblock 59 und andererseits als erstes Eingangssignal zu einem Addierer 60, der als weiteres Eingangssignal das Ausgangssignal 51 des Sensors 24 zugeführt erhält. Der Addierer 60 zieht vom Signal 51 des Sensors 24 das vom Addierer 57 ermittelte Signal 58 ab, und gibt ein Ausgangssignal 61 an einen Funktionsblock 62 weiter. Die beiden Funktionsblöcke 59, 62 leiten ihre Ausgangssignale 63, 64 an jeweils ein Filter 65, 66 weiter, an deren Ausgang jeweils die Korrektursignale 53, 54 auftreten.

Den Funktionsblöcken 59, 62 wird außerdem das korrigierte Ausgangssignal 43 zugeleitet. Ferner wird das korrigierte Ausgangssignal 43 einem Kennliniierglied 67 zugeführt, das ein Ausgangssignal 68 an den Regler 37 weiterleitet.

Die Funktionsweise der Kompensationswaage 10 sowie die Korrekturdes Meßergebnisses unter Berücksichtigung der auf die Waage 10 einwirkenden Störungen 36 wird anhand der Figuren 1 und 2 näher erläutert:

Die Kompensationswaage 10 ermittelt das Gewicht oder die Masse der Last 15 über die auf die Waage 10 einwirkende Kraft m g, wobei mit m die Masse der Last 15 und mit g die Erdbeschleunigung bezeichnet ist. Die Beaufschlagung des beweglichen Teils 14 der Waage 10 führt zu einer Auslenkung des Hebels 18 in $y_w$-Richtung, die vom Positionssensor 23 erfaßt wird. Der Regler 37 stellt in Abhängigkeit von dem vom Positionssensor 23 zugeführtes Ist-Wert und in Abhängigkeit von einen Soll-Wert, der vorzugsweise der Ruhelage entspricht, als Ausgangssignal 38 einen Strom für die elektromagnetische Anordnung 21 bereit, der in der Spule 22 fließt. Die elektromagnetische Anordnung 21 erzeugt auf diese Weise eine Kraft, die der von der Last 15 erzeugten Kraft entgegenwirkt und die dazu führt, daß vorzugsweise die Ruhelage des Hebels 18, beziehungsweise des beweglichen Teils 14 wieder hergestellt wird. Die Wiederherstellung der Ruhelage nach dem Auflegen einer Last 15 entspricht einer vollständigen Kompensation der Gewichtskraft durch die elektromagnetische Kraft.

Die auf die Waage 10 einwirkende Störkraft 36, läßt sich angeben durch:

$$P = -(A \cdot m + B) \cdot \bar{y} - (C \cdot m + D) \cdot \ddot{\bar{\theta}} + K \cdot m \cdot g$$

Die Berücksichtigung des Terms $K \cdot m \cdot g$ bedeutet, daß die Einwirkung der Last 15 auf das bewegliche Teil 14 zunächst wie eine Störkraft behandelt wird.

Die Konstante K hängt vom konstruktiven Aufbau der Waage und vom für die Kompensation erforderlichen Strom ab.

Die Konstanten A, B, C und D ergeben sich aus der Massenverteilung und geometrischen Gegebenheiten der Waage 10.

Die auf das bewegliche Teil 14 einwirkenden Störkräfte und die Last 15 ergeben eine Auslenkung des Hebels 18 in $y_w$-Richtung, die zu einem unkorrigierten Ausgangssignal 31 führen, das sich folgendermaßen darstellen läßt:

$$V(s) = G(S) \cdot [-(A \cdot m + B) \cdot \bar{y} - (C \cdot m + D) \cdot \ddot{\bar{\theta}}) + K \cdot m \cdot g]$$

Mit s ist die Variable der Laplace-Transformierten bezeichnet. G(s) gibt die Übertragungsfunktion der Waage 10 an, die wenigstens näherungsweise einem System 2. Ordnung entspricht.

Das Signal V (s) setzt sich zusammen aus dem Meßsignal $G(s) \cdot K \cdot m \cdot g$, das durch das Signal $P \cdot G(s)$ gestört ist.

Um den Störignalanteil $G(s) \cdot P$ aufzuheben, wird in der korrektursignalverarbeitenden Anordnung 50 ein Gesamtkorrektursignal 56 in Abhängigkeit von den Signalen 51, 52 vorgenommen, die von den auf dem beweglichen Teil 14 angeordneten Beschleunigungssensoren 24, 25 abgegeben werden. Eine Aufhebung des Störsignals P im Addierer 40 ist möglich, wenn das Korrektursignal 56 genau dem Störsignal P entspricht. Die beiden Signale müssen deshalb kohärent sein. Ihr Verhältnis für jede Frequenz im interessierenden Frequenzbereich, beispielsweise von 0 bis 100 Hz sollte gleich 1 sein. Eine hohe obere Frequenzgrenze bedeutet eine entsprechend kurze Meßzeit, innerhalb der ein Meßergebnis mit einer bestimmten Genauigkeit, beispielsweise 1‰ zur Verfügung steht.

Bei der Bereitstellung des Gesamtkorrektursignals 56 wird zunächst im Addierer 57 die Differenz der von den Beschleunigungssensoren 24, 25 abgegebenen Signale 51, 52 gebildet. Das Signal 51 des Beschleunigungssensors 24 kann angegeben werden als $V_1 = K_1 \cdot (\bar{y} + d_1 \cdot \ddot{\bar{\theta}} + \bar{y}_R)$, das des Beschleunigungssensors 25 mit $V_2 = K_2 \cdot (\bar{y} + d_2 \cdot \ddot{\bar{\theta}} + \ddot{y}_R)$. Die Beschleunigungssensoren 24, 25 sind derart abgestimmt, daß gleiche Beschleunigungen gleiche Ausgangssignale 51, 52 zur Folge haben. Differenzbildung im Addierer 57 ergibt die Drehbeschleunigung $\ddot{\bar{\theta}}$ als Ausgangssignal

58. Durch die Differenzbildung im Addierer 57 fallen die translatorischen Beschleunigungen $\ddot{y}$ sowie $\ddot{y}$ heraus. Die Differenz der Distanzen $d_1$ und $d_2$ ist ebenfalls bekannt und kann mit einem konstanten Gewichtungsfaktor berücksichtigt werden. Der Funktionsblock 59 multipliziert die Eingangsgröße mit einem Term $C \cdot m + D$. Die Masse m der Last 15 wird aus dem Ausgangssignal 43 am Ausgang des Tiefpasses 42 abgeleitet. Das Ausgangssisnal 43 ist hierzu gegebenenfalls mit einem Gewichtungsfaktor zu gewichten. Diese Gewichtung ist In Figur 2 ebenso wie andere Gewichtungen nicht eingetragen. Gegebenenfalls wird das Ausgangssignal 63 des Funktionsblocks 59 dem Filter 65 zugeführt, dessen Übertragungsfunktion $F_2$ (s) wenigstens näherungsweise gleich der Übertragungsfunktion G(s) der Waage 10 gewählt wird. Vorzugsweise wird die Übertragungsfunktion $F_2$ (s) derart gewählt, daß sie das Verhältnis des elektrischen Stroms in der Spule 22 zur Störbeschleunigung $\ddot{\theta}$ darstellt. Der Filter 65 wird dann als Abbildungsfilter bezeichnet. Das Ausgangssignal 54 ist somit der zur Korrektur der Drehbeschleunigung $\ddot{\theta}$ vorgesehene Anteil am Gesamtkorrektursignal 56.

Vom Ausgangsignal 51 des Beschleunigungssensors 24 wird im Addierer 60 der Anteil der Drehbeschleunigung $\ddot{\theta}$ abgezogen. Die Gewichtung der Drehbeschleunigung $\ddot{\theta}$ wird vor der Subtraktion derart vorgenommen, daß am Ausgang 61 des Addierers 60 die Drehbeschleunigung $\ddot{\theta}$ nicht mehr auftritt. Das Ausgangssignal 61 ist darstellbar als $u\,(s) = K \cdot (\ddot{y} + \ddot{y}_R)$. Dieses Signal kann umgeformt werden in einen Ausdruck, der nur noch $\ddot{y}$ als Variable enthält. Dieses Signal wird dem Funktionsblock 62 zugeleitet, der das Signal mit dem Term $A \cdot m + B$ multipliziert. Gegebenenfalls ist das Filter 66 vorgesehen, dessen Übertragungsfunktion $F_1$ (s) ebenfalls wenigstens näherungsweise gleich der der Waage ist. Auch die Übertragungsfunktion $F_1$ (s) des Filters 66 wird vorzugsweise derart realisiert, daß sie das Verhältnis des durch die Spule 22 der elektromagnetischen Anordnung 21 fließenden elektrischen Stroms zur Storbeschleunigung $\ddot{y}$ darstellt. Das Filter 66 wird dann als Abbildungsfilter bezeichnet.

Das Gesamtkorrektursignal 56 ergibt sich somit zu:

$$G(s) \cdot [(A \cdot m + B) \cdot \ddot{y} + (C \cdot m + D) \cdot \ddot{\theta}\,]$$

und entspricht somit genau dem Störsignalanteil P. Die phasenrichtige Addition im Addierer 40 eliminiert den Störsignalanteil.

Ein reduzierter Frequenzbereich, innerhalb dem die Störsignale eleminiert werden, ergibt sich durch Weglassen eines oder beider Filter 65, 66. Eine weitere Möglichkeit ist dadurch gegeben, daß nach dem Addierer 55 ein einziges Filter vorgesehen ist, dessen Übertragungsfunktion wenigstens näherungsweise dem eines Abbildungsfilters ist, die das Verhältnis des Spulenstroms zu den Störbeschleunigungen darstellt. Die Reduzierung des Frequenzbereiches ist gleichbedeutend mit einer Verlängerung der Meßzeit. Eine Verkürzung der Meßzeit kann dagegen erreicht werden, wenn das Ausgangssignal 43 nach einer Umformung dem Regler 37 zugeführt wird. Das Kennlinienglied 67 ermittelt aus dem Ausgangssignal 43, sofern dieses nicht bereits normiert wurde, die Masse m der Last 15 und berechnet daraus die Quadratwurzel. Das Ergebnis wird bei der Festlegung eines Differential-Anteils des Reglers 37 berücksichtigt, der als Proportional-Differential-Regler ausgebildet ist.

Eine andere Korrekturmöglichkeit besteht darin, daß die Korrektursignale 53, 54 oder das Gesamtkorrektursignal 56 innerhalb des geschlossenen Regelkreises zugeführt werden. Dieser Eingriff ist in dem Teil der signalverarbeitenden Anordnung 30 möglich, der den Spulenstrom in der elektromagnetischen Anordnung 21 festlegt. Beispielsweise wird zu dem Ausgangssignal 38 des Reglers 37 ein Korrektursignal addiert. Es ist möglich, beispielsweise die Korrektur der Drehbeschleunigung $\ddot{\theta}$, die mit dem Korrektursignal 54 vorgenommen wird, in der signalverareitenden Anordnung 30 eingreifen zu lassen, während die Korrektur der translatorischen Beschleunigung $\ddot{y}$ weiterhin im Addierer 40 vorgenommen wird. Eine Verlegung wenigstens eines Korrektureingriffts in den Regelkreis führt zu einer Erhöhung der Arbeitsgeschwindigkeit der Waage. Diese Maßnahme verringert geringfügig die Stabilität des Regelkreises und erfordert einen entsprechend höheren Abgleichaufwand.

Die in der korrektursignalverarbeitenden Anordnung 50 verursachte Signallaufzeitverzögerung in Bezug auf das nicht korrigierte Ausgangssignal 31 ist auf einfache Weise mit dem Verzögerer 39 zu beseitigen, der vor den Addierer 40 geschaltet ist.

Der vor den Ausgang 43 gestaltete Tiefpaß 42 beseitigt hochfrequente Störschwingungen, die weit oberhalb des interessierenden Frequenzberelchs liegen.

Die gesamte Auswerteschaltung ist als Programm in einem Rechnersystem, implementierbar. Als Eingangssignale sind die von den Sensoren 23, 24, 25 erfaßten Meßwerte vorgesehen. Als Ausgangssignale stehen die Informationen über den für die Kompensierung der Störungen vorzugebenden Strom 38 sowie das Meßergebnis 43 zur Verfügung.

Ferner können als Eingangssignale einer diskreten Auswerteschaltung oder eines Rechnersystems die Vorgabe der am Meßort vorliegenden Erdbeschleunigung g und/oder der Temperatur vorgesehen sein. Die von diesen Größen ausgehende Beeinflussung des Meßergebnisses ist dann ebenfalls korrigierbar.

**Patentansprüche**

1. Kompensationswaage,

   mit einem beweglich geführten, von einer Last (15), deren Gewicht oder Masse (m) zu bestimmen ist, aus einer Ruhelage auslenkbaren Teil (14),
   mit einer elektromagnetischen Anordnung (21), die wenigstens eine Spule (22) enthält,
   mit einem um einen Drehpunkt (17) beweglich gelagerten Hebel (18), der die von elektromagnetischen Anordnung (21) in Bezug auf die Last (15) aufzubringende Kraft hereinflußt,
   mit einem Positionssensor (23), der die Position des beweglichen Teils (14) bezüglich einem Träger (12) der Kompensationswaage (10) ermittelt,
   mit einem Regler (37), der in Abhängigkeit von dem vom Positionssensor (23) abgegebenen Signal einen durch die Spule (22) fließenden Strom (33) derart festlegt, daß das bewegliche Teil (14) eine bestimmte Position, vorzugsweise die Ruhelage, einnimmt, wobei der Strom (33) ein Maß für das Gewicht oder die Masse (m) der Last (15) ist, gekennzeichnet durch wenigstens zwei am beweglichen Teil (14) angeordnete Beschleunigungssensoren (24, 25) zum Bestimmen der translatorischen Beschleunigung ($\ddot{y}$) in Wägerichtung und der Drehbeschleunigung ($\ddot{\theta}$) des Teils (14) um eine durch den Drehpunkt (17) gehende, im wesentlichen senkrecht auf dem Hebel (18) stehende Drehachse, die jeweils Signale an eine korrektursignalverarbeitende Anordnung (50) abgeben, die wenigstens ein Korrektursignal (53, 54, 56) zum Beeinflussen des Meßergebnisses (43) ermittelt.

2. Waage nach Anspruch 1, bei der wenigstens ein Korrektursignal (53, 54, 56) nach der Ermittlung des Stroms (33) in das Meßergebnis (43) eingreift.

3. Waage nach Anspruch 1, bei der wenigstens ein Korrektursignal (53, 54, 56) in den Regelkreis (37, 38, 21, 34, 18, 23) eingreift.

4. Waage nach einem der vorhergehenden Ansprüche, bei der die korrektursignalverarbeitende Anordnung (50) zwei Signalpfade (24, 60, 62, 66; 25, 57,59, 65) enthält, wobei ein Pfad (24, 60, 62, 64, 66) ein Korrektursignal (53) für die translatorische Beschleunigung ($\ddot{y}$) und der andere Pfad (25, 57, 58, 59, 63, 65) das Korrektursignal (54) für die Drehbeschleunigung ($\ddot{\theta}$) bereitstellt.

5. Waage nach Anspruch 4, mit einem Funktionsblock (59, 62) in jedem Korrektursignalpfad, der die Drehbeschleunigung ($\ddot{\theta}$) mit dem Term C·m + D und die Translationsbeschleunigung ($\ddot{y}$) mit dem Term A·m + B jeweils laufend gewichtet, wobei m die aus dem Ausgangssignal (43) durch Gewichtung ableitbare Masse (m) der Last (15) und A, B, C und D Konstanten sind.

6. Waage nach Anspruch 4 oder 5, mit einem Filter (65) in dem einen Pfad und/oder einem Filter (66) im anderen Korrektursignalpfad, deren Übertragungsfunktionen jeweils einem System zweiter Ordnung entsprechen.

7. Waage nach Anspruch 6, bei der das Filter (65, 66) als Abbildungsfilter ausgebildet ist, dessen Übertragungsfunktion das Verhältnis des durch die Spule (22) der elektromagnetischen Anordnung (21) fließenden elektrischen Stroms zur Storbeschleunigung ($\ddot{y}$, Ö) dar- stellt.

8. Waage nach Anspruch 4 oder 5, mit einem Filter, dem als Eingangssignal, die beiden Korrektursignale (53, 54) zugeführt sind, dessen Übertragungsfunktion einem System zweiter Ordnung entspricht, die vorzugsweise das Verhältnis des durch die Spule (22) der elektromagnetischen Anordnung (21) fließenden elektrischen Stroms zur Storbeschleunigung ($\ddot{y}$, Ö) darstellt.

9. Waage nach einem der vorhergehenden Ansprüche, mit einer Verzögerung (39) des unkorrigierten Signals (31) der Wägezelle.

10. Waage nach einem der vorhergehenden Ansprüche, mit einem Proportional-Differential(D)-Regler (37), wobei der D-Anteil in Abhängigkeit von $\sqrt{m}$ verändert ist.

11. Waage nach einem der vorhergehenden Ansprüche, mit einem Tiefpaßfilter (42), das nach dem korrigierten Signal (41) und vor dem Ausgang (43) angeordnet ist.

**12.** Waage nach einem der vorhergehenden Ansprüche, aufgebaut wenigstens teilweise in Single-Block-Bauweise, bei der wenigstens das bewegliche Teil (14), die Sensoren (24, 25), das Führungsparallelogramm (13) mit den Biegelagern (16), Teile (22) der elektromagnetischen Anordnung (21) sowie der Hebel (18) aus einem Werkstück herausgearbeitet sind.

## Claims

**1.** Compensation balance, having a movably guided part (14) which can be deflected from a rest position by a load (15) whose weight or mass (m) is to be determined, having an electromagnetic arrangement (21) which contains at least one coil (22), having a lever (18) which is mounted movably about a fulcrum (17) and influences the force to be applied by the electromagnetic arrangement (21) with respect to the load (15), having a position sensor (23) which determines the position of the movable part (14) with respect to a carrier (12) of the compensation balance (10), and having a controller (37) which, as a function of the signal transmitted by the position sensor (23), determines a current (33) flowing through the coil (22) in such a way that the movable part (14) assumes a specific position, preferably the rest position, the current (33) being a measure of the weight or the mass (m) of the load (15), characterized by at least two acceleration sensors (24, 25), which are arranged on the movable part (14) and are intended for determining the translatory acceleration ($\ddot{y}$) in the weighing direction and the angular acceleration ($\dot{\ddot{\theta}}$) of the part (14) about an axis of rotation passing through the fulcrum (17) and essentially perpendicular to the lever (18), which each transmit signals to an arrangement (50) which processes the correction signals and determines at least one correction signal (53, 54, 56) for the purpose of influencing the measurement result (43).

**2.** Balance according to Claim 1, in which at least one correction signal (53, 54, 56) affects the measurement result (43) after the determination of the current (33).

**3.** Balance according to Claim 1, in which at least one correction signal (53, 54, 56) affects the control loop (37, 38, 21, 34, 18, 23).

**4.** Balance according to one of the preceding claims, in which the arrangement (50) processing the correction signals contains two signal paths (24, 60, 62, 66; 25, 57, 59, 65), one path (24, 60, 62, 64, 66) providing a correction signal (53) for the translatory acceleration ($\ddot{y}$), and the other path (25, 57, 58, 59, 63, 65) providing the correction signal (54) for the angular acceleration ($\dot{\ddot{\theta}}$).

**5.** Balance according to Claim 4, having a function block (59, 62) in each correction signal path, which continuously weights the angular acceleration ($\dot{\ddot{\theta}}$) with the term $C \cdot m + D$, and the translatory acceleration ($\ddot{y}$) with the term $A \cdot m + B$, respectively, m being the mass (m) of the load (15) which can be derived from the output signal (43) by weighting, and A, B, C and D being constants.

**6.** Balance according to Claim 4 or 5, having a filter (65) in one path and/or a filter (66) in the other correction signal path, the transfer functions of which filters respectively correspond to a system of second order.

**7.** Balance according to Claim 6, in which the filter (65, 66) is constructed as an imaging filter whose transfer function represents the ratio of the electric current flowing through the coil (22) of the electromagnetic arrangement (21) to the disturbing acceleration ($\ddot{y}$, $\ddot{O}$).

**8.** Balance according to Claim 4 or 5, having a filter to which the two correction signals (53, 54) are fed as input signal and whose transfer function corresponds to a system of second order which preferably represents the ratio of the electric current flowing through the coil (22) of the electromagnetic arrangement (21) to the disturbing acceleration ($\ddot{y}$, $\ddot{O}$).

**9.** Balance according to one of the preceding claims, having a time-delay block (39) in the uncorrected signal (31) of the load cell.

**10.** Balance according to one of the preceding claims, having a proportional-plus-derivative (D) controller (37), the D component varying as a function of $\sqrt{m}$.

**11.** Balance according to one of the preceding claims, having a low-pass filter (42) which is arranged downstream of the corrected signal (41) and upstream of the output (43).

12. Balance according to one of the preceding claims and constructed at least partially in a single-block design in which at least the movable part (14), the sensors (24, 25), the guide parallelogram (13) with the flexural bearings (16), parts (22) of the electromagnetic arrangement (21) and the lever (18) are fashioned from one workpiece.

**Revendications**

1. Balance à compensation comprenant :

   - une partie mobile (14) ayant une mobilité guidée en partant d'une position de repos, sous l'effet de la charge (15) dont on veut déterminer le poids ou la masse (m),
   - un montage électromagnétique (21) comportant au moins une bobine (22),
   - un levier (18) monté mobile autour d'un point de rotation (17) qui influence la force que doit exercer le dispositif électromagnétique (21) par rapport à la charge,
   - un capteur de position (23) qui détermine la position de la partie mobile (14) par rapport à un support (12) de la balance à compensation (10),
   - un organe de régulation (37) qui fixe un courant (33) traversant la bobine (22) en fonction du signal donné par le capteur de position (23) pour que la partie mobile (14) prenne une position déterminée de préférence la position de repos, le courant (33) étant une mesure du poids ou de la masse (m) de la charge (15),

   balance caractérisée par

   - au moins deux capteurs d'accélération (24, 25) prévus sur la partie mobile (14) pour déterminer l'accélération de translation ($\ddot{y}$) dans la direction horizontale et de l'accélération de rotation ($\ddot{\theta}$) de la pièce (14) autour d'un axe de rotation essentiellement vertical par rapport au levier (18),
   - ces capteurs fournissant des signaux à un montage (50) traitant le signal de correction et déterminant au moins un signal de correction (53, 54, 56) pour influencer le résultat de mesure (43).

2. Balance selon la revendication 1, dont au moins un signal de correction (53, 54, 56) agit sur le résultat de mesure (43) après que l'on ait déterminé le courant (33).

3. Balance selon la revendication 1, dont au moins un signal de correction (53, 54, 56) agit sur le circuit de régulation (37, 38, 21, 34, 18, 23).

4. Balance selon au moins l'une des revendications précédentes, dont le montage (50) de traitement du signal de correction comporte deux chemins de signal (24, 60, 62, 66 ; 25, 57, 59, 65), un chemin (24, 60, 62, 64, 66) fournissant un signal de correction (53) pour l'accélération de translation ($\ddot{y}$) et l'autre chemin (25, 57, 58, 59, 63, 65), le signal de correction (54) de l'accélération de rotation ($\ddot{\theta}$).

5. Balance selon la revendication 4 avec un bloc fonctionnel (59, 62) dans chaque chemin du signal de correction qui pondère l'accélération de rotation ($\ddot{\theta}$) avec le terme (C.m + D) et l'accélération de translation ($\ddot{y}$) par le terme (A.m + B), chaque fois en continu, m étant la masse m de la charge (15) obtenue du signal de sortie (43) par pondération et (A, B, C, D) sont des constantes.

6. Balance selon la revendication 4 ou 5, comprenant un filtre (65) dans un chemin et/ou filtre (66) dans un autre chemin de signal de correction et dont les fonctions de transfert correspondent chaque fois à un système de second ordre.

7. Balance selon la revendication 6, dans laquelle le filtre (65, 66) est en forme de filtre d'affichage dont la fonction de transfert représente le rapport du courant électrique traversant la bobine (22) du montage électromagnétique (21) et de l'accélération parasite ($\ddot{y}$, $\ddot{\theta}$).

8. Balance selon la revendication 4 ou 5, comprenant un filtre qui reçoit comme signal d'entrée les deux signaux de correction 53, 54 dont la fonction de transfert correspond à un système de second ordre et qui représente, de préférence, le rapport du courant électrique traversant la bobine (22) du montage électromagnétique (21) et de l'accélération parasite ($\ddot{y}$, $\ddot{\theta}$).

9. Balance selon l'une des revendications précédentes, comportant un élément de temporisation (39) pour le signal non corrigé (31) de la cellule de pesée.

10. Balance selon l'une des revendications précédentes, comportant un organe de régulation proportionnel-différentiel (D) (37), dont la partie (D) est variable en fonction de la racine carrée de (m).

11. Balance selon l'une des revendications précédentes, comprenant un filtre passe bas (42) prévu après le signal corrigé (41) et avant la sortie (43).

12. Balance selon l'une des revendications précédentes, composée au moins partiellement en construction par bloc unique dont au moins la partie mobile (14), les capteurs (24, 25), le parallélogramme de guidage (13) avec les paliers de flexion (16), les parties (22) du montage électromagnétique (21) et du levier (18), sont usinés dans une même pièce.

FIG.1

# FIG.2

EP 0 511 217 B2